(19)

**Europäisches Patentamt**
**European Patent Office**
**Office européen des brevets**

(11) **EP 3 169 131 A1**

(12) **EUROPEAN PATENT APPLICATION**

(43) Date of publication:
**17.05.2017 Bulletin 2017/20**

(21) Application number: **16203767.5**

(22) Date of filing: **22.08.2006**

(51) Int Cl.:
*H04W 74/00* (2009.01)　*H04L 1/18* (2006.01)
*H04L 5/00* (2006.01)　*H04L 5/02* (2006.01)
*H04L 27/26* (2006.01)　*H04W 8/26* (2009.01)
*H04W 52/08* (2009.01)　*H04W 52/14* (2009.01)
*H04W 52/16* (2009.01)　*H04W 52/24* (2009.01)
*H04W 52/48* (2009.01)　*H04W 52/50* (2009.01)
*H04W 72/02* (2009.01)　*H04W 72/04* (2009.01)
*H04W 72/12* (2009.01)　*H04W 74/08* (2009.01)

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.08.2005 US 710599 P**

(62) Document number(s) of the earlier application(s) in accordance with Art. 76 EPC:
**06802004.9 / 1 925 109**

(71) Applicant: **InterDigital Technology Corporation Wilmington, DE 19809 (US)**

(72) Inventors:
• **ZHANG, Guodong**
**FARMINGDALE, NY New York 11735 (US)**
• **PAN, Kyle Jung-Lin**
**Smithtown, NY New York 11787 (US)**
• **TSAI, Allan Y.**
**BOONTON, NJ New Jersey 07005 (US)**

(74) Representative: **Awapatent AB**
**P.O. Box 5117**
**200 71 Malmö (SE)**

Remarks:
This application was filed on 13-12-2016 as a divisional application to the application mentioned under INID code 62.

(54) **METHOD AND APPARATUS FOR ACCESSING AN UPLINK RANDOM ACCESS CHANNEL IN A SINGLE CARRIER FREQUENCY DIVISION MULTIPLE ACCESS SYSTEM**

(57) A method and apparatus for accessing a contention-based uplink random access channel (RACH) in a single carrier frequency division multiple access (SC-FDMA) system are disclosed. A wireless transmit/receive unit (WTRU) randomly selects a RACH subchannel and a signature among a plurality of available RACH subchannels and signatures. The WTRU transmits a preamble using the selected signature via the selected RACH subchannel at a predetermined or computed transmission power. A base station monitors the RACH to detect the preamble and sends an acquisition indicator (AI) to the WTRU when a signature is detected on the RACH. When receiving a positive acknowledgement, the WTRU sends a message part to the base station. If receiving a negative acknowledgement or no response, the WTRU retransmits the preamble

*FIG. 3A*

EP 3 169 131 A1

**Description**

FIELD OF INVENTION

The present invention is related to wireless communication systems. More particularly, the present invention is related to a method and apparatus for accessing a contention-based uplink random access channel (RACH) in a single carrier frequency division multiple access (SC-FDMA) system.

BACKGROUND

The third generation partnership project (3GPP) and 3GPP2 are currently considering a long term evolution (LTE) of the universal mobile telecommunication system (UMTS) terrestrial radio access (UTRA). Currently, SC-FDMA has been adopted for the uplink air interface of the evolved UTRA.

In an SC-FDMA system, a plurality of orthogonal subcarriers are transmitted simultaneously. The subcarriers are divided into a plurality of subcarrier blocks, (also known as resource blocks (RBs)). A block of subcarriers is a basic resource unit in an SC-FDMA system. The subcarrier block may be either a localized subcarrier block or a distributed subcarrier block. The localized subcarrier block is a set of consecutive subcarriers and the distributed subcarrier block is a set of equally spaced non-consecutive subcarriers.

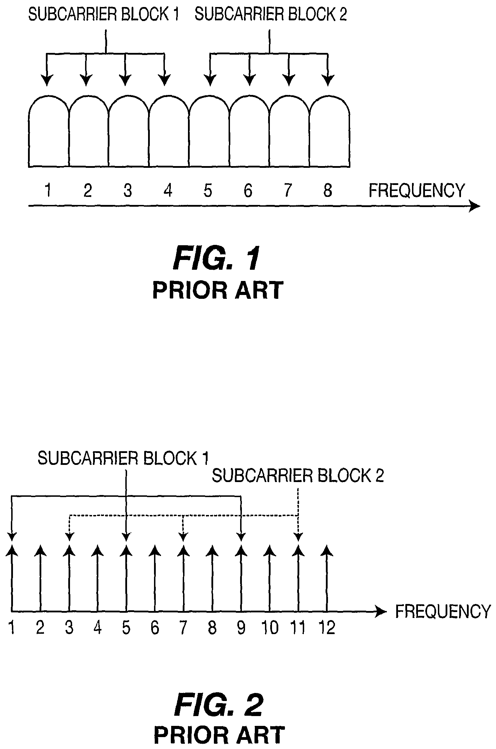

Figure 1 illustrates two localized subcarrier blocks, each comprising four consecutive subcarriers. The localized subcarrier block is a basic scheduling unit for uplink transmissions in a localized-mode SC-FDMA system. Figure 2 illustrates two distributed subcarrier blocks. In this example, the distributed subcarrier block 1 includes subcarriers 1, 5 and 9, and the distributed subcarrier block 2 includes subcarriers 3, 7 and 11. The distributed subcarrier block is a basic scheduling unit for uplink transmissions in a distributed-mode SC-FDMA system. Depending on a data rate or a buffer status, a Node-B assigns at least one subcarrier block for uplink transmissions for a wireless transmit/receive unit (WTRU).

When a WTRU transitions from an idle mode to a connected mode, the WTRU needs to communicate with a base station (or a network) using a RACH, which is a contention-based channel. The RACH transmissions of the WTRU have two parts: a preamble part and a message part. In a conventional wideband code division multiple access (WCDMA) system, (up to Release 6), a transmit power ramping up scheme is used for accessing the RACH. The WTRU starts transmission of a preamble to a base station with a very low (or minimum) initial transmit power level. If the preamble is successfully decoded by the base station, the base station sends a positive acknowledgement (ACK) to the WTRU via an acquisition indicator channel (AICH). If the base station fails to decode the preamble, the base station sends a negative acknowledgement (NACK). When the WTRU receives a NACK or no response, the WTRU retransmits the preamble while ramping up the transmit power level in subsequent transmission time intervals (TTIs).

This power ramp up process which starts with a low or minimum power causes an extra delay for uplink random access which is undesirable.

SUMMARY

The present invention is related to a method and apparatus for accessing a contention-based uplink RACH in an SC-FDMA system. A WTRU randomly selects a RACH subchannel and a signature among a plurality of available RACH subchannels and signatures. The WTRU transmits a preamble using the selected signature via the selected RACH subchannel at a predetermined transmission power. A base station monitors the RACH subchannels to detect the preamble. The base station sends an acquisition indicator (AI) to the WTRU when a signature is detected on the RACH. When the WTRU receives an ACK, the WTRU sends a random access message to the base station. If the WTRU receives a NACK or no response, the WTRU retransmits the preamble. The base station may send a power adjustment for the message part and/or timing and frequency correction.

BRIEF DESCRIPTION OF THE DRAWINGS

Figure 1 shows a conventional localized subcarrier block for SC-FDMA.
Figure 2 shows a conventional distributed subcarrier block for SC-FDMA.
Figure 3 is a flow diagram of a process for accessing a contention-based RACH in an SC-FDMA system in accordance with the present invention.
Figure 4 is a flow diagram of a process for processing the preamble in a base station in accordance with the present invention.
Figure 5 is a block diagram of a WTRU which implements the process of Figure 3.

Figure 6 is a block diagram of a base station which implements the process of Figure 4.

DETAILED DESCRIPTION OF THE PREFERRED EMBODIMENTS

When referred to hereafter, the terminology "WTRU" includes but is not limited to a user equipment (UE), a mobile station (STA), a fixed or mobile subscriber unit, a pager, or any other type of device capable of operating in a wireless environment. When referred to hereafter, the terminology "base station" includes but is not limited to a Node-B, a site controller, an access point (AP) or any other type of interfacing device in a wireless environment.

The features of the present invention may be incorporated into an integrated circuit (IC) or be configured in a circuit comprising a multitude of interconnecting components.

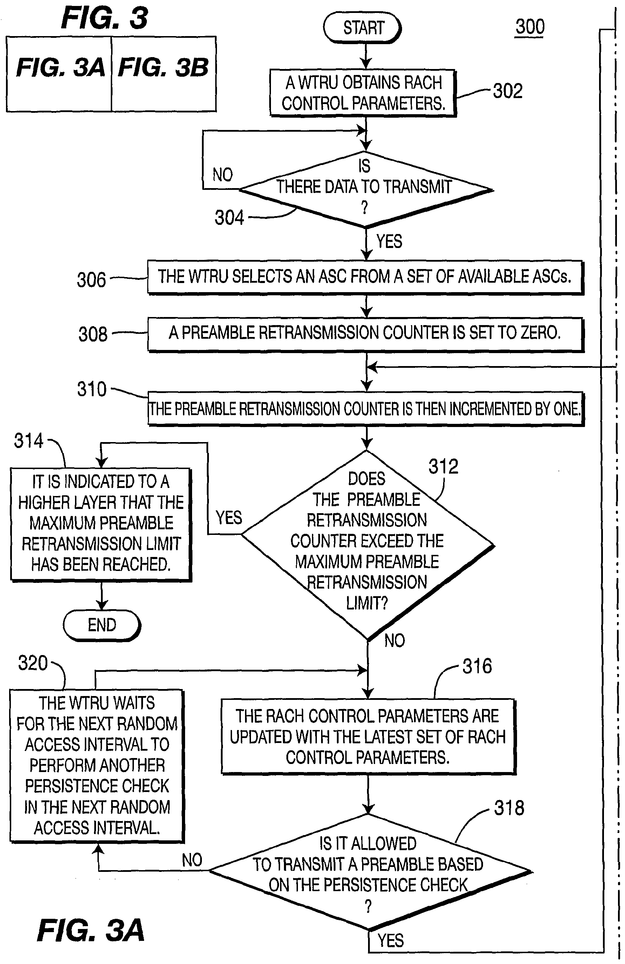

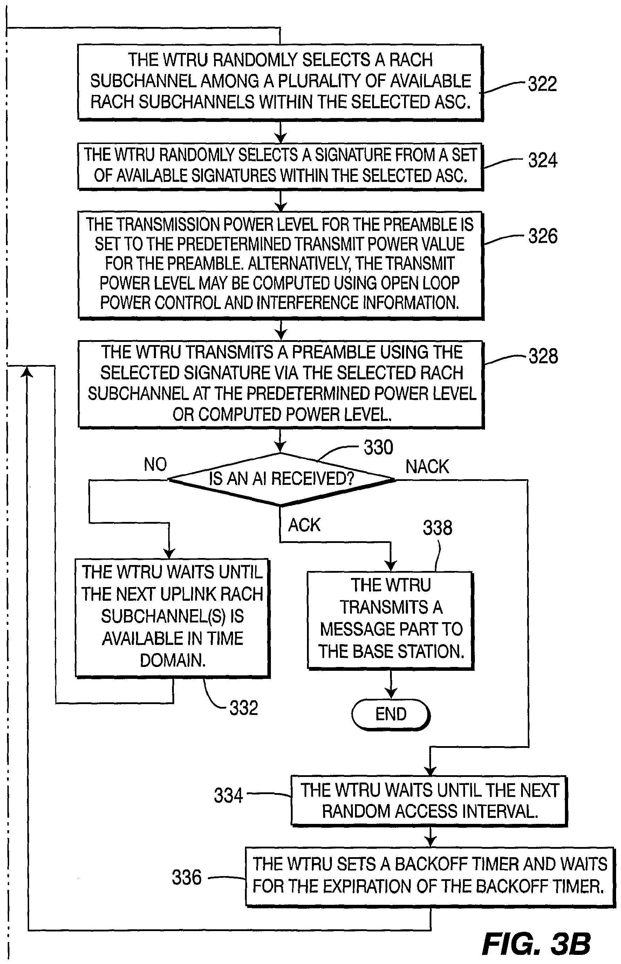

Figure 3 is a flow diagram of a process 300 for accessing a contention-based RACH in an SC-FDMA system in accordance with the present invention. After performing a cell search successfully, a WTRU obtains RACH control parameters (step 302). The RACH control parameters include at least one of, but are not limited to:

1) Predetermined transmit power for the preamble (optional) or uplink interference level at the Node B, which helps the WTRU to determine the transmit power of the preamble;
2) Persistence level of transmission on the RACH;
3) Preamble scrambling code;
4) Message length (optional) in time, frequency, or both;
5) AICH transmission timing parameter;
6) A set of available signatures and a set of available RACH subchannels for each of a plurality of access service classes (ASCs);
7) Maximum preamble retransmission limit;
8) Power offset $P_{p-m}$ (optional), measured in dB, between the power of the control part of the random access message and the power of the rest of the random access message;
9) A set of transport format parameters, including a power offset between the data part and the control part of the random access message for each transport format; and
10) A one-to-one mapping relation of the time and frequency locations between the RACH and the AICH.

The RACH may be defined by at least one subcarrier, (or at least one subcarrier block), over at least one time slot. Alternatively, the RACH may be defined by at least one subcarrier, (or at least one subcarrier block), over at least one time slot with at least one spreading code. If the RACH is defined with several subcarriers, the subcarriers may be either consecutive or equally-spaced. Similarly, if the RACH is defined with several subcarrier blocks, the subcarrier blocks may be localized subcarrier blocks or distributed subcarrier blocks. Consecutive subcarriers and localized subcarrier blocks are preferred over equally-spaced subcarriers and distributed subcarrier blocks because of less ambiguity in timing detection at the receiver, (e.g., the Node B).

When it is determined at step 304 that there is data to be transmitted, the WTRU selects an ASC from a set of available ASCs (step 306). Each ASC is associated with an identifier $i$ of RACH subchannel set and a persistence value $P_i$.

A preamble retransmission counter is set to zero (step 308). The preamble retransmission counter is then incremented by one before initiating a transmission of a preamble (step 310). It is determined whether the preamble retransmission counter exceeds the maximum preamble retransmission limit (step 312). If the retransmission counter exceeds the maximum preamble retransmission limit, it is indicated to a higher layer that the maximum preamble retransmission limit has been reached (step 314), and the process 300 ends.

If the retransmission counter does not exceed the maximum preamble retransmission limit, the WTRU checks whether any new RACH control parameters have been received, and if so, the RACH control parameters are updated with the latest set of RACH control parameters (step 316).

The WTRU then performs a persistence check to determine whether it is allowed to transmit a preamble based on the persistence check (step 318). Based on the persistence value $Pi$, the WTRU determines whether to start the preamble transmission procedure in a current random access interval. The duration of the random access interval is a design parameter, and may be a single TTI, multiple TTIs or a fraction of a TTI. If the transmission of the preamble is not allowed based on the persistence check, the WTRU waits for the next random access interval to perform another persistence check in the next random access interval (step 320). The persistency check is repeated until transmission is permitted. If the transmission of the preamble is allowed based on the persistence check, the random access procedure is initiated (steps 322-328).

The WTRU randomly selects a RACH subchannel among a plurality of available RACH subchannels within the selected ASC (step 322). The WTRU randomly selects a signature from a set of available signatures within the selected ASC (step 324). The random functions for selecting the RACH subchannel and the signature shall be such that each of the allowed selections is chosen with an equal probability.

The transmission power level for the preamble is set to the predetermined transmit power value for the preamble (step 326). Alternatively, the transmission power level for the preamble may be computed using open loop power control and interference information sent on a broadcast channel (BCH) from the cell (optional). The predetermined value may be set large enough to ensure that the signal-to-noise ratio (SNR) at the base station meets the predefined threshold in order for the base station to successfully decode the preamble. Due to the SC-FDMA structure, the large transmit power of the preamble is limited to the subcarrier(s), (or subcarrier block(s)), used by the RACH only and does not affect other subcarriers or subcarrier blocks in the same cell. In a conventional WCDMA system, the initial transmit power of the preamble is set to a very low level and incrementally ramped up each time the preamble is retransmitted. This causes a significant delay until the preamble is detected by the base station. In contrast, in accordance with the present invention, since the preamble is transmitted at a sufficiently high transmission power level, and the RACH subchannel and signature are selected randomly, such delay is eliminated or reduced.

The WTRU then transmits a preamble using the selected signature via the selected RACH subchannel at the predetermined or computed power level (step 328). After transmitting the preamble, the WTRU monitors an AICH to detect an AI sent by the base station in response to the preamble (step 330). The AICH is a fixed rate physical channel used to carry AIs. The AICH may be spread over several subcarriers to have frequency diversity and make it more reliable. An AICH may be multiplexed with the downlink shared control channel. An AI corresponds to a signature on the RACH. There is unique and fixed one-to-one mapping relation of the time and frequency locations between the RACH and the AICH. With the signature and the fixed one-to-one mapping relation, the WTRU determines which AI is a response to its random access.

If no AI is detected on the AICH, the WTRU waits until the next uplink RACH sub-channel(s) is available in time domain (step 332), and the process 300 returns to step 310 to retransmit the preamble. During the retransmission of the preamble, the transmit power level of the preamble may or may not be ramped up.

If it is determined at step 330 that a NACK is detected on the AICH, the WTRU waits until the next random access interval (step 334). The WTRU then sets a backoff timer and waits for the expiration of the backoff timer (step 336). The backoff timer is preferably set to an integer multiple of 10 ms, which is randomly selected between minimum and maximum backoff periods. The minimum and maximum backoff periods may be set equal when a fixed delay is desired. The minimum and maximum backoff periods may be set to zero when no delay other than the one due to persistency is desired. After expiration of the backoff timer, the process 300 returns to step 310 to retransmit the preamble. During the retransmission of the preamble, the preamble transmission power level may or may not be ramped up.

If it is determined at step 330 that an ACK is detected on the AICH, the WTRU transmits a message part to the base station (step 338). The message part contains information that a user wants to send to the base station. The information in the message part may include at least one of, but not limited to:

1) Scheduling information, such as WTRU identity, data (traffic) type, data size, quality of service (QoS) information, and WTRU transmission power;
2) Small amount of traffic data (optional);
3) Layer 3 control message;
4) Uplink pilot signals; and
5) Transport format indicator (TFI) of the transmitted message.

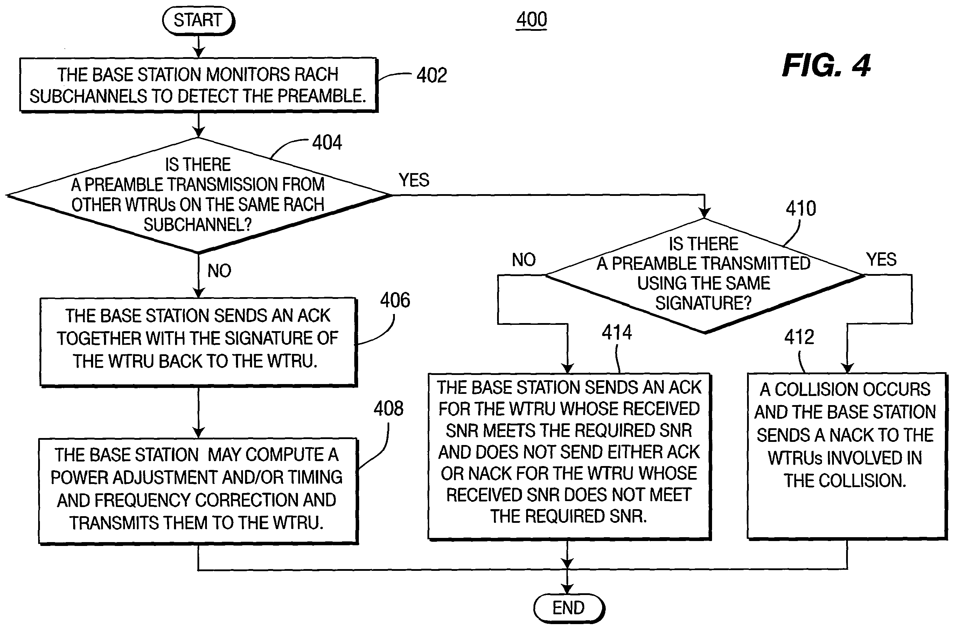

In transmitting the message part, the WTRU may adjust the transmit power of the message part and timing and frequency according to a power adjustment and a timing and frequency correction, respectively, which are generated by the base station, which will be explained with reference to Figure 4 hereinafter. The message part is transmitted N uplink access slots after the uplink access slot of the last transmitted preamble depending on the AICH transmission timing parameter. Transmission power of the control part of the message part should be $P_{p-m}$ dB higher than the transmit power of the last transmitted preamble. Both N and $P_{p-m}$ are design parameters.

Figure 4 is a flow diagram of a process 400 for processing the preamble in a base station in accordance with the present invention. The base station monitors RACH subchannels to detect the preamble (step 402). The base station determines whether there is a preamble transmission from other WTRUs on the same RACH subchannel (step 404).

If there is no preamble transmission from other WTRUs on the RACH subchannel used by the WTRU, the received SNR at the base station is likely to be high enough to allow the base station to successfully decode the preamble. After successfully decoding the preamble, the base station sends an ACK together with the signature of the WTRU back to the WTRU (step 406). Bit-wise multiplication of the ACK with the signature may be performed as in the conventional WCDMA system.

The base station may optionally compute a timing and frequency correction and transmits them to the WTRU (step 408). Optionally, a power adjustment may also be computed and signaled to the WTRU. The base station computes the difference between the received SNR and the SNR threshold that is required for successful decoding to compute the power adjustment for the WTRU, (i.e., transmit power reduction for the transmission of the subsequent message part of the WTRU). The power adjustment $P_{adjust}$ is preferably computed as follows:

$$P_{adjust} = \max\ (\mathrm{SNR}_{received} - \mathrm{SNR}_{required} - Margin,\ 0);\quad \text{Equation (1)}$$

where *Margin* is a design parameter. All the parameters in Equation (1) are in the units of dB. The power adjustment may be implicitly carried in resource allocation information in Node B's response to the preamble.

Because SC-FDMA is more sensitive to the timing and frequency synchronization errors than a conventional WCDMA system, the base station may process the preamble and derive the timing and frequency correction for the WTRU, and transmit them to the WTRU along with the AI.

If it is determined at step 404 that there is at least one preamble transmitted by other WTRUs on the same RACH subchannel, it is further determined whether there is a preamble transmitted using the same signature (step 410). If there is at least one preamble transmitted using the same signature, a collision occurs and the base station sends a NACK to the WTRUs involved in the collision, (i.e., sends a NACK for the signature) (step 412). The base station may transmit the NACK with the signature. For example, bit-wise multiplication of the NACK with the signature may be performed as in the conventional WCDMA system.

If it is determined at step 410 that there is no preamble transmitted using the same signature, the received SNR may or may not meet the required SNR for successful decoding due to the near far problem or interference caused by cross-correlation between signatures. The base station generates an ACK for the WTRU whose received SNR meets the required SNR, (i.e., ACK for the signature used by the WTRU), and does not generate either an ACK or a NACK for the WTRU whose received SNR does not meet the required SNR (step 414). The base station may compute the power adjustment and the timing and frequency correction for the WTRU whose received SNR meets the required SNR.

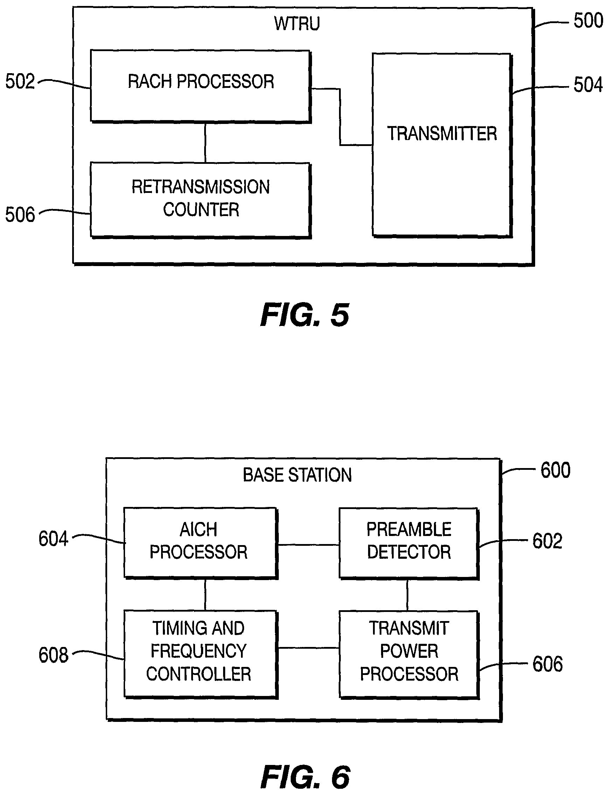

Figure 5 is a block diagram of a WTRU 500 which implements the process of Figure 3. The WTRU 500 includes a RACH processor 502 and a transmitter 504. The RACH processor 502 is configured to randomly select a RACH subchannel among a plurality of available RACH subchannels and a signature among a plurality of available signatures. The transmitter 504 is configured to transmit a preamble using the selected signature via the selected RACH subchannel at a predetermined or computed transmission power level. The WTRU 500 may include a retransmission counter 506. The retransmission counter 506 is for tracking the number of retransmissions of the preamble. The retransmission counter 506 is initialized at transmission of a new preamble and incremented each time the preamble is retransmitted. The transmitter 504 transmits the preamble only if the retransmission counter 506 does not exceed a retransmission limit.

Figure 6 is a block diagram of a base station 600 which implements the process of Figure 4. The base station 600 includes a preamble detector 602 and an AICH processor 604. The preamble detector 602 is configured to detect a preamble transmitted by a WTRU on a RACH. The AICH processor 604 is configured to send an AI to the WTRU when a preamble is detected on the RACH. The base station 600 may also include a transmit power controller 606 and/or a timing and frequency controller 608. The preamble detector 602 determines whether there is a preamble transmitted by another WTRU on the selected RACH subchannel and the AICH processor 604 sends an ACK if there is no preamble transmitted by another WTRU on the selected RACH subchannel.

The transmit power controller 606 is configured to compute a power adjustment based on a received power level of the preamble. The AICH processor 604 sends the power adjustment to the WTRU along with the AI to adjust the transmit power level of the message part. The timing and frequency controller 608 is configured to compute a timing and frequency correction based on the preamble. The AICH processor 604 sends the timing and frequency correction to the WTRU along with the AI to adjust timing and frequency.

Embodiments.

1. A method for accessing a contention-based uplink RACH in an SC-FDMA wireless communication system including a WTRU and a base station.
2. The method of embodiment 1 comprising the step of the WTRU randomly selecting a RACH subchannel among a plurality of available RACH subchannels.
3. The method of embodiment 2 comprising the step of the WTRU randomly selecting a signature among a plurality of available signatures.
4. The method of embodiment 3 comprising the step of the WTRU transmitting a preamble using the selected signature via the selected RACH subchannel at a transmission power level that is sufficient to guarantee successful decoding of the preamble by the base station.
5. The method as in any of the embodiments 2-4, further comprising the step of the WTRU selecting an ASC among a plurality of available ASCs, the available signatures and the available RACH subchannels being given for each of the ASCs, whereby the WTRU selects the RACH subchannel and the signatures based on the selected ASC.

6. The method as in any of the embodiments 4-5, wherein the WTRU initializes a retransmission counter at an initial transmission of the preamble, increments the retransmission counter by one each time the WTRU retransmits the preamble, and transmits the preamble only if the retransmission counter does not exceed a retransmission limit.

7. The method as in any of the embodiments 4-6, further comprising the step of the WTRU performing a persistence check before transmission of the preamble, whereby the WTRU transmits the preamble only if the transmission of the preamble is allowed based on the persistence check.

8. The method of embodiment 7 further comprising the step of the WTRU waiting for a next random access interval if the transmission of the preamble is not allowed based on the persistence check.

9. The method as in any of the embodiments 4-8, further comprising the step of the base station monitoring the RACH subchannels to detect the preamble.

10. The method of embodiment 9 further comprising the step of the base station sending an AI to the WTRU on an AICH when a signature is detected on the RACH, the AI being one of an ACK and a NACK.

11. The method as in any of the embodiments 9-10, comprising the step of the WTRU monitoring an AICH to detect an AI.

12. The method of embodiment 11 comprising the step of if an ACK is detected, the WTRU sending a message part to the base station.

13. The method as in any of the embodiments 10-12, wherein the AICH is multiplexed with downlink shared control channel.

14. The method as in any of the embodiments 10-13, comprising the step of the base station determining whether there is a preamble transmitted by another WTRU on the selected RACH subchannel.

15. The method of embodiment 14 comprising the step of the base station sending an ACK if there is no preamble transmitted by another WTRU on the selected RACH subchannel.

16. The method as in any of the embodiments 9-15, comprising the step of the base station computing a power adjustment based on a received power level of the preamble.

17. The method of embodiment 16 comprising the step of the base station sending the power adjustment to the WTRU along with the AI, whereby the WTRU adjusts transmit power level of the message part based on the power adjustment.

18. The method as in any of the embodiments 9-17, comprising the step of the base station computing a timing and frequency correction based on the preamble.

19. The method of embodiment 18 comprising the step of the base station sending the timing and frequency correction to the WTRU along with the AI, whereby the WTRU adjusts timing and frequency based on the timing and frequency correction.

20. The method as in any of the embodiments 9-19, comprising the step of, if there is at least one preamble transmitted by another WTRU on the selected RACH subchannel, the base station determining whether a signature used in the preamble transmitted by another WTRU is the same to the selected signature.

21. The method of embodiment 20 comprising the step of, if there is at least one preamble transmitted by another WTRU on the selected RACH subchannel, the base station sending a NACK to the WTRUs.

22. The method as in any of the embodiments 14-21, comprising the step of, if the signature used by another WTRU is different from the selected signature, the base station sending an ACK to a WTRU whose SNR meets a required SNR and sending nothing to a WTRU whose SNR does not meet the required SNR.

23. The method of embodiment 22 further comprising the step of the base station computing a power adjustment based on a received power level of the preamble of the WTRU whose SNR meets the required SNR.

24. The method of embodiment 23 further comprising the step of the base station sending the power adjustment to the WTRU, whereby the WTRU adjusts transmit power level of the message part based on the power adjustment.

25. The method as in any of the embodiments 16-24, wherein the power adjustment is implicitly carried in resource allocation information in a response to the preamble.

26. The method as in any of the embodiments 22-25, further comprising the step of the base station computing a timing and frequency correction based on the preamble of the WTRU whose SNR meets the required SNR.

27. The method of embodiment 26 comprising the step of the base station sending the timing and frequency correction to the WTRU along with the AI, whereby the WTRU adjusts timing and frequency based on the timing and frequency correction.

28. The method as in any of the embodiments 11-27, further comprising the step of, if no AI is detected, the WTRU waiting until a next available random access interval to retransmit the preamble.

29. The method as in any of the embodiments 11-28, further comprising the step of, if a NACK is detected, the WTRU setting a backoff timer to retransmit the preamble upon expiration of the backoff timer, wherein a transmit power for retransmission of the preamble is not increased.

30. The method of embodiment 29 wherein the backoff timer is set to an integer multiple of 10 ms, which is randomly selected between minimum and maximum backoff periods.

31. The method of embodiment 30 wherein the minimum and maximum backoff periods are set equal.

32. The method of embodiment 30 wherein the minimum and maximum backoff periods are set to zero.

33. The method as in any of the embodiments 1-32, wherein the RACH subchannels are defined by at least one subcarrier over at least one time slot.

34. The method as in any of the embodiments 1-32, wherein the RACH subchannels are defined by at least one subcarrier block including a plurality of subcarriers over at least one time slot.

35. The method of the embodiment 34 wherein the subcarrier block is one of a distributed subcarrier block and a localized subcarrier block.

36. The method as in any of the embodiments 1-32, wherein the RACH subchannels are defined by at least one subcarrier over at least one time slot with at least one spreading code.

37. The method as in any of the embodiments 4-36, wherein the transmission power level of the preamble is predetermined.

38. The method as in any of the embodiments 4-36, wherein the transmission power level of the preamble is computed by the WTRU.

39. A WTRU for accessing a contention-based uplink RACH in an SC-FDMA wireless communication system including a WTRU and a base station.

40. The WTRU of embodiment 39 comprising a RACH processor configured to randomly select a RACH subchannel among a plurality of available RACH subchannels and a signature among a plurality of available signatures.

41. The WTRU of embodiment 40 comprising a transmitter configured to transmit a preamble using the selected signature via the selected RACH subchannel at a transmission power level that is sufficient to guarantee successful decoding of the preamble by the base station.

42. The WTRU as in any of the embodiments 40-41, wherein the RACH processor is configured to select an ASC among a plurality of available ASCs, the available signatures and the available RACH subchannels being given for each of the ASCs, whereby the RACH processor selects the RACH subchannel and the signatures based on the selected ASC.

43. The WTRU as in any of the embodiments 40-42, comprising a retransmission counter for tracking the number of retransmissions of the preamble, whereby the transmitter transmits the preamble only if the retransmission counter does not exceed a retransmission limit.

44. The WTRU as in any of the embodiments 40-43, wherein the RACH processor is configured to perform a persistence check before transmission of the preamble, whereby the transmitter transmits the preamble only if the transmission of the preamble is allowed based on the persistence check.

45. The WTRU of the embodiment 44 wherein the RACH processor waits for a next random access interval if the transmission of the preamble is not allowed based on the persistence check.

46. The WTRU as in any of the embodiments 40-45, wherein the RACH processor monitors an AICH to detect an AI and sends a message part to the base station if an ACK is detected.

47. The WTRU of embodiment 46 wherein the AICH is multiplexed with downlink shared control channel.

48. The WTRU as in any of the embodiments 46-47, wherein if no AI is detected, the RACH processor waits until a next available RACH to retransmit the preamble.

49. The WTRU as in any of the embodiments 46-48, comprising a backoff timer, whereby if a NACK is detected, the RACH processor sets the backoff timer to retransmit the preamble upon expiration of the backoff timer, wherein a transmit power for retransmission of the preamble is not increased.

50. The WTRU of embodiments 49 wherein the backoff timer is set to an integer multiple of 10 ms, which is randomly selected between minimum and maximum backoff periods.

51. The WTRU of embodiment 50 wherein the minimum and maximum backoff periods are set equal.

52. The WTRU of embodiment 50 wherein the minimum and maximum backoff periods are set to zero.

53. The WTRU as in any of the embodiments 39-52, wherein the RACH subchannels are defined by at least one subcarrier over at least one time slot.

54. The WTRU as in any of the embodiments 39-52, wherein the RACH subchannels are defined by at least one subcarrier block including a plurality of subcarriers over at least one time slot.

55. The WTRU of embodiment 54 wherein the subcarrier block is one of a distributed subcarrier block and a localized subcarrier block.

56. The WTRU as in any of the embodiments 39-52, wherein the RACH subchannels are defined by at least one subcarrier over at least one time slot with at least one spreading code.

57. The WTRU as in any of the embodiments 41-56, wherein the transmission power level of the preamble is predetermined.

58. The WTRU as in any of the embodiments 41-56, wherein the transmission power level of the preamble is computed by the WTRU.

59. A base station for processing contention-based uplink RACH transmissions in an SC-FDMA wireless communication system including a WTRU and a base station.

60. The base station of embodiment 59 comprising a preamble detector configured to detect a preamble transmitted by a WTRU on a RACH.

61. The base station of embodiment 60 comprising an AICH processor configured to send an AI via an AICH to the WTRU when a preamble is detected on the RACH, the AI being one of an CK and a NACK.

62. The base station as in any of the embodiments 60-61, wherein the preamble detector determines whether there is a preamble transmitted by another WTRU on the selected RACH subchannel and the AICH processor sends an ACK if there is no preamble transmitted by another WTRU on the selected RACH subchannel.

63. The base station as in any of the embodiments 60-62, comprising a transmit power controller configured to compute a power adjustment based on a received power level of the preamble, wherein the AICH processor sends the power adjustment to the WTRU and the WTRU adjusts transmit power level of the message part based on the power adjustment.

64. The base station of embodiment 63 wherein the power adjustment is implicitly carried in resource allocation information in a response to the preamble.

65. The base station as in any of the embodiments 60-64, comprising a timing and frequency controller configured to compute a timing and frequency correction based on the preamble, wherein the AICH processor sends the timing and frequency correction to the WTRU along with the AI, and the WTRU adjusts timing and frequency based on the timing and frequency correction.

66. The base station as in any of the embodiments 60-65, wherein, if there is at least one preamble transmitted by another WTRU on the selected RACH subchannel, the preamble detector is configured to determine whether a signature used in the preamble transmitted by another WTRU is same to the selected signature and if so, the AICH processor sends a NACK to the WTRUs.

67. The base station of embodiment 66 wherein, if the signature used by another WTRU is different from the selected signature, the AICH processor sends an ACK to a WTRU whose SNR meets a required SNR and sending nothing to a WTRU whose SNR does not meet the required SNR.

68. The base station of embodiment 67 comprising a transmit power controller configured to compute a power adjustment based on a received power level of the preamble of the WTRU whose SNR meets the required SNR, wherein the AICH processor sends the power adjustment to the WTRU along with the AI, and the WTRU adjusts transmit power level of the message part based on the power adjustment.

69. The base station as in any of the embodiment 67-68, comprising a timing and frequency controller configured to compute a timing and frequency correction based on the preamble of the WTRU whose SNR meets the required SNR, wherein the AICH processor sends the timing and frequency correction to the WTRU along with the AI, and the WTRU adjusts timing and frequency based on the timing and frequency correction.

70. The base station as in any of the embodiments 61-69, wherein the AICH is multiplexed with downlink shared control channel.

71. In a single carrier frequency division multiple access (SC-FDMA) wireless communication system including a wireless transmit/receive unit (WTRU) and a base station, a method for accessing a contention-based uplink random access channel (RACH), the method comprising:

the WTRU randomly selecting a RACH subchannel among a plurality of available RACH subchannels;
the WTRU randomly selecting a signature among a plurality of available signatures; and
the WTRU transmitting a preamble using the selected signature via the selected RACH subchannel at a transmission power level that is sufficient to guarantee successful decoding of the preamble by the base station.

72. The method of emb. 71 further comprising:

the WTRU selecting an access service class (ASC) among a plurality of available ASCs, the available signatures and the available RACH subchannels being given for each of the ASCs, whereby the WTRU selects the RACH subchannel and the signatures based on the selected ASC.

73. The method of emb. 71 wherein the WTRU initializes a retransmission counter at an initial transmission of the preamble, increments the retransmission counter by one each time the WTRU retransmits the preamble, and transmits the preamble only if the retransmission counter does not exceed a retransmission limit.

74. The method of emb. 71 further comprising:

the WTRU performing a persistence check before transmission of the preamble, whereby the WTRU transmits the preamble only if the transmission of the preamble is allowed based on the persistence check.

75. The method of emb. 74 further comprising:

the WTRU waiting for a next random access interval if the transmission of the preamble is not allowed based on the persistence check.

76. The method of emb. 71 further comprising:

the base station monitoring the RACH subchannels to detect the preamble;
the base station sending an acquisition indicator (AI) to the WTRU on an acquisition indicator channel (AICH) when a signature is detected on the RACH, the AI being one of a positive acknowledgement (ACK) and a negative acknowledgement (NACK);
the WTRU monitoring an AICH to detect an AI; and

if an ACK is detected, the WTRU sending a message part to the base station.
77. The method of emb. 76 wherein the AICH is multiplexed with downlink shared control channel.
78. The method of emb. 76 further comprising:

the base station determining whether there is a preamble transmitted by another WTRU on the selected RACH subchannel; and
the base station sending an ACK if there is no preamble transmitted by another WTRU on the selected RACH subchannel.

79. The method of emb. 78 further comprising:

the base station computing a power adjustment based on a received power level of the preamble; and
the base station sending the power adjustment to the WTRU along with the AI, whereby the WTRU adjusts transmit power level of the message part based on the power adjustment.

80. The method of emb. 78 further comprising:

the base station computing a timing and frequency correction based on the preamble; and
the base station sending the timing and frequency correction to the WTRU along with the AI, whereby the WTRU adjusts timing and frequency based on the timing and frequency correction.

81. The method of emb. 78 further comprising:

if there is at least one preamble transmitted by another WTRU on the selected RACH subchannel, the base station determining whether a signature used in the preamble transmitted by another WTRU is the same to the selected signature; and
if so, the base station sending a NACK to the WTRUs.

82. The method of emb. 81 further comprising:

if the signature used by another WTRU is different from the selected signature, the base station sending an ACK to a WTRU whose signal-to-noise ratio (SNR) meets a required SNR and sending nothing to a WTRU whose SNR does not meet the required SNR.

83. The method of emb. 82 further comprising:

the base station computing a power adjustment based on a received power level of the preamble of the WTRU whose SNR meets the required SNR; and
the base station sending the power adjustment to the WTRU, whereby the WTRU adjusts transmit power level of the message part based on the power adjustment.

84. The method of emb. 83 wherein the power adjustment is implicitly carried in resource allocation information in a response to the preamble.

85. The method of emb. 82 further comprising:

the base station computing a timing and frequency correction based on the preamble of the WTRU whose SNR meets the required SNR; and
the base station sending the timing and frequency correction to the WTRU along with the AI, whereby the WTRU adjusts timing and frequency based on the timing and frequency correction.

86. The method of emb. 76 further comprising:

if no AI is detected, the WTRU waiting until a next available random access interval to retransmit the preamble.

87. The method of emb. 76 further comprising:

if a NACK is detected, the WTRU setting a backoff timer to retransmit the preamble upon expiration of the backoff timer, wherein a transmit power for retransmission of the preamble is not increased.

88. The method of emb. 87 wherein the backoff timer is set to an integer multiple of 10 ms, which is randomly selected between minimum and maximum backoff periods.
89. The method of emb. 88 wherein the minimum and maximum backoff periods are set equal.
90. The method of emb. 88 wherein the minimum and maximum backoff periods are set to zero.
91. The method of emb. 71 wherein the RACH subchannels are defined by at least one subcarrier over at least one time slot.
92. The method of emb. 71 wherein the RACH subchannels are defined by at least one subcarrier block including a plurality of subcarriers over at least one time slot.
93. The method of emb. 92 wherein the subcarrier block is one of a distributed subcarrier block and a localized subcarrier block.
94. The method of emb. 71 wherein the RACH subchannels are defined by at least one subcarrier over at least one time slot with at least one spreading code.
95. The method of emb. 71 wherein the transmission power level of the preamble is predetermined.
96. The method of emb. 71 wherein the transmission power level of the preamble is computed by the WTRU.
97. In a single carrier frequency division multiple access (SC-FDMA) wireless communication system including a wireless transmit/receive unit (WTRU) and a base station, a WTRU for accessing a contention-based uplink random access channel (RACH), the WTRU comprising:

a RACH processor configured to randomly select a RACH subchannel among a plurality of available RACH subchannels and a signature among a plurality of available signatures; and
a transmitter configured to transmit a preamble using the selected signature via the selected RACH subchannel at a transmission power level that is sufficient to guarantee successful decoding of the preamble by the base station.

98. The WTRU of emb. 97 wherein the RACH processor is configured to select an access service class (ASC) among a plurality of available ASCs, the available signatures and the available RACH subchannels being given for each of the ASCs, whereby the RACH processor selects the RACH subchannel and the signatures based on the selected ASC.
99. The WTRU of emb. 97 further comprises:

a retransmission counter for tracking the number of retransmissions of the preamble, whereby the transmitter transmits the preamble only if the retransmission counter does not exceed a retransmission limit.

100. The WTRU of emb. 97 wherein the RACH processor is configured to perform a persistence check before transmission of the preamble, whereby the transmitter transmits the preamble only if the transmission of the preamble is allowed based on the persistence check.
101. The WTRU of emb. 100 wherein the RACH processor waits for a next random access interval if the transmission of the preamble is not allowed based on the persistence check.
102. The WTRU of emb. 97 wherein the RACH processor monitors an acquisition indicator channel (AICH) to detect an acquisition indicator (AI) and sends a message part to the base station if a positive acknowledgement (ACK) is detected.
103. The WTRU of emb. 102 wherein the AICH is multiplexed with downlink shared control channel.

104. The WTRU of emb. 102 wherein if no AI is detected, the RACH processor waits until a next available RACH to retransmit the preamble.

105. The WTRU of emb. 102 further comprises a backoff timer, whereby if a NACK is detected, the RACH processor sets the backoff timer to retransmit the preamble upon expiration of the backoff timer, wherein a transmit power for retransmission of the preamble is not increased.

106. The WTRU of emb. 105 wherein the backoff timer is set to an integer multiple of 10 ms, which is randomly selected between minimum and maximum backoff periods.

107. The WTRLT of emb. 106 wherein the minimum and maximum backoff periods are set equal.

108. The WTRU of emb. 106 wherein the minimum and maximum backoff periods are set to zero.

109. The WTRU ofemb. 97 wherein the RACH subchannels are defined by at least one subcarrier over at least one time slot.

110. The WTRU of emb. 97 wherein the RACH subchannels are defined by at least one subcarrier block including a plurality of subcarriers over at least one time slot.

111. The WTRU of emb. 110 wherein the subcarrier block is one of a distributed subcarrier block and a localized subcarrier block.

112. The WTRU ofemb. 97 wherein the RACH subchannels are defined by at least one subcarrier over at least one time slot with at least one spreading code.

113. The WTRU of emb. 97 wherein the transmission power level of the preamble is predetermined.

114. The WTRU of emb. 97 wherein the transmission power level of the preamble is computed by the WTRU.

115. In a single carrier frequency division multiple access (SC-FDMA) wireless communication system including a wireless transmit/receive unit (WTRU) and a base station, a base station for processing contention-based uplink random access channel (RACH) transmissions, the base station comprising:

a preamble detector configured to detect a preamble transmitted by a WTRU on a RACH; and
an acquisition indicator channel (AICH) processor configured to send an acquisition indicator (AI) via an AICH to the WTRU when a preamble is detected on the RACH, the AI being one of a positive acknowledgement (ACK) and a negative acknowledgement (NACK).

116. The base station of emb. 115 wherein the preamble detector determines whether there is a preamble transmitted by another WTRU on the selected RACH subchannel and the AICH processor sends an ACK if there is no preamble transmitted by another WTRU on the selected RACH subchannel.

117. The base station of emb. 116 further comprising:

a transmit power controller configured to compute a power adjustment based on a received power level of the preamble, wherein the AICH processor sends the power adjustment to the WTRU and the WTRU adjusts transmit power level of the message part based on the power adjustment.

118. The base station of emb. 117 wherein the power adjustment is implicitly carried in resource allocation information in a response to the preamble.

119. The base station of emb. 116 further comprising:

a timing and frequency controller configured to compute a timing and frequency correction based on the preamble, wherein the AICH processor sends the timing and frequency correction to the WTRU along with the AI, and the WTRU adjusts timing and frequency based on the timing and frequency correction.

120. The base station of emb. 116 wherein if there is at least one preamble transmitted by another WTRU on the selected RACH subchannel, the preamble detector is configured to determine whether a signature used in the preamble transmitted by another WTRU is same to the selected signature and if so, the AICH processor sends a NACK to the WTRUs.

121. The base station of emb. 120 wherein if the signature used by another WTRU is different from the selected signature, the AICH processor sends an ACK to a WTRU whose signal-to-noise ratio (SNR) meets a required SNR and sending nothing to a WTRU whose SNR does not meet the required SNR.

122. The base station of emb. 121 further comprising:

a transmit power controller configured to compute a power adjustment based on a received power level of the preamble of the WTRU whose SNR meets the required SNR, wherein the AICH processor sends the power adjustment to the WTRU along with the AI, and the WTRU adjusts transmit power level of the message part based on the power adjustment.

123. The base station of emb. 121 further comprising:

a timing and frequency controller configured to compute a timing and frequency correction based on the preamble of the WTRU whose SNR meets the required SNR, wherein the AICH processor sends the timing and frequency correction to the WTRU along with the AI, and the WTRU adjusts timing and frequency based on the timing and frequency correction.

124. The base station of emb. 115 wherein the AICH is multiplexed with downlink shared control channel.

Although the features and elements of the present invention are described in the preferred embodiments in particular combinations, each feature or element can be used alone without the other features and elements of the preferred embodiments or in various combinations with or without other features and elements of the present invention.

**Claims**

1. A wireless transmit/receive unit (WTRU) comprising:

a processor and a transmitter configured to:

perform a cell search;
obtain control information in response to the cell search;
establish a preamble transmission power level used to transmit a random access preamble over a Random Access Channel (RACH);
transmit the random access preamble using single carrier frequency division multiple access (SC-FDMA) in accordance with the obtained control information over the RACH on a set of consecutive resource blocks carrying the RACH;
monitor for a received response to the random access preamble, which includes at least a resource allocation; and
transmit a random access message including an identifier of the WTRU using the SC-FDMA utilizing resources derived from at least the resource allocation.

2. The WTRU of claim 1, wherein:

the processor, which is configured to monitor for the resource allocation, further monitors for a timing advance; and
the transmitter is configured to transmit the random access message with a timing derived from the timing advance.

3. The WTRU of claim 1, wherein:

the processor, which is configured to monitor for the resource allocation, further monitors for a power command; and
the transmitter is configured to transmit the random access message with a transmission power level derived from the power command.

4. The WTRU of claim 1, wherein the resource allocation indicates one or more resource blocks to transmit the random access message.

5. The WTRU of claim 1, wherein the one or more resource blocks indicate a plurality of subcarriers to transmit the random access message.

6. The WTRU of claim 5, wherein the indicated subcarriers are consecutive subcarriers.

7. The WTRU of claim 1, wherein the random access preamble is derived from a sequence, the sequence being indicated by the received response.

8. The WTRU of claim 1, wherein the transmitter is configured to transmit the random access preamble having a duration which is variable.

9. The WTRU of claim 1, wherein the transmitter is configured to transmit a subsequent random access preamble at an increased power level relative to a previously transmitted random access preamble.

10. The WTRU of claim 1, wherein the transmitter is configured to perform a cell search; and the processor is configured to obtain the control information thereafter.

11. A method implemented by a wireless transmit/receive unit (WTRU), the method comprising:

  performing a cell search;
  obtaining control information in response to the cell search;
  establishing a preamble transmission power level used to transmit a random access preamble over a Random Access Channel (RACH);
  transmitting the random access preamble, using single carrier frequency division multiple access (SC-FDMA) in accordance with the obtained control information over the RACH on a set of consecutive resource blocks carrying the RACH;
  monitoring for a received response to the random access preamble, which includes at least a resource allocation; and
  transmitting a random access message including an identifier of the WTRU, using the SC-FDMA utilizing resources derived from at least the resource allocation.

12. The method of claim 11, wherein:

  the monitoring for the received response includes monitoring for a timing advance in the received response; and
  the transmitting of the random access message includes transmitting the random access message with a timing derived from the timing advance.

13. The method of claim 11, wherein:

  the monitoring for the received response includes monitoring for a power command in the received response; and
  the transmitting of the random access message includes transmitting the random access message with a transmission power level derived from the power command.

14. method of claim 13, further comprising: indicating, via the one or more resource blocks, a plurality of consecutive or distributed subcarriers to transmit the random access message.

15. The method of claim 14, further comprising deriving the random access preamble from at least a sequence indicated by the received response.

SUBCARRIER BLOCK 1    SUBCARRIER BLOCK 2

1   2   3   4   5   6   7   8   FREQUENCY

## FIG. 1
## PRIOR ART

SUBCARRIER BLOCK 1
SUBCARRIER BLOCK 2

1  2  3  4  5  6  7  8  9  10 11 12   FREQUENCY

## FIG. 2
## PRIOR ART

## FIG. 3

| FIG. 3A | FIG. 3B |
|---------|---------|

START    300

A WTRU OBTAINS RACH
CONTROL PARAMETERS. ——302

IS
THERE DATA TO TRANSMIT
?    —NO
304

YES

306 —— THE WTRU SELECTS AN ASC FROM A SET OF AVAILABLE ASCs.

308 —— A PREAMBLE RETRANSMISSION COUNTER IS SET TO ZERO.

310 —— THE PREAMBLE RETRANSMISSION COUNTER IS THEN INCREMENTED BY ONE.

314 —

IT IS INDICATED TO A
HIGHER LAYER THAT THE
MAXIMUM PREAMBLE
RETRANSMISSION LIMIT
HAS BEEN REACHED.

DOES
THE PREAMBLE
RETRANSMISSION
COUNTER EXCEED THE
MAXIMUM PREAMBLE
RETRANSMISSION
LIMIT?    312

YES

END

NO

320 —

THE WTRU WAITS
FOR THE NEXT RANDOM
ACCESS INTERVAL TO
PERFORM ANOTHER
PERSISTENCE CHECK
IN THE NEXT RANDOM
ACCESS INTERVAL.

316

THE RACH CONTROL PARAMETERS ARE
UPDATED WITH THE LATEST SET OF RACH
CONTROL PARAMETERS.

318

IS IT ALLOWED
TO TRANSMIT A PREAMBLE BASED
ON THE PERSISTENCE CHECK
?    —NO

YES

## FIG. 3A

FIG. 3B

FIG. 4

START

THE BASE STATION MONITORS RACH SUBCHANNELS TO DETECT THE PREAMBLE. — 402

404
IS THERE A PREAMBLE TRANSMISSION FROM OTHER WTRUs ON THE SAME RACH SUBCHANNEL?

400

YES

410
IS THERE A PREAMBLE TRANSMITTED USING THE SAME SIGNATURE?

NO

THE BASE STATION SENDS AN ACK TOGETHER WITH THE SIGNATURE OF THE WTRU BACK TO THE WTRU. — 406

NO

YES

414

412

THE BASE STATION MAY COMPUTE A POWER ADJUSTMENT AND/OR TIMING AND FREQUENCY CORRECTION AND TRANSMITS THEM TO THE WTRU. — 408

THE BASE STATION SENDS AN ACK FOR THE WTRU WHOSE RECEIVED SNR MEETS THE REQUIRED SNR AND DOES NOT SEND EITHER ACK OR NACK FOR THE WTRU WHOSE RECEIVED SNR DOES NOT MEET THE REQUIRED SNR.

A COLLISION OCCURS AND THE BASE STATION SENDS A NACK TO THE WTRUs INVOLVED IN THE COLLISION.

END

EP 3 169 131 A1

WTRU — 500

502 — RACH PROCESSOR

504 — TRANSMITTER

506 — RETRANSMISSION COUNTER

**FIG. 5**

BASE STATION — 600

604 — AICH PROCESSOR

602 — PREAMBLE DETECTOR

608 — TIMING AND FREQUENCY CONTROLLER

606 — TRANSMIT POWER PROCESSOR

**FIG. 6**

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/058058 A1 (CHO MIN-HEE [KR] ET AL) 17 March 2005 (2005-03-17) * paragraphs [0009], [00010], [0025] - [0033], [0036], [0037]; figure 2 * | 1-15 | INV. H04W74/00 H04L1/18 H04L5/00 H04L5/02 |
| A | "3rd Generation Partnership Project; Technical Specification Group Radio Access Network; Physical Layer Aspects for Evolved UTRA (Release 7)", 3GPP DRAFT; 25814-011, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 30 June 2005 (2005-06-30), XP050950809, Retrieved from the Internet: URL:http://www.3gpp.org/ftp/tsg_ran/WG1_RL 1/TSGR1_AH/LTE_AH_0506/Docs/ [retrieved on 2005-06-30] * chapter 9.1 * | 1-15 | H04L27/26 H04W8/26 H04W52/08 H04W52/14 H04W52/16 H04W52/24 H04W52/48 H04W52/50 H04W72/02 H04W72/04 H04W72/12 H04W74/08 |
| A | US 2005/135403 A1 (KETCHUM JOHN W [US] ET AL) 23 June 2005 (2005-06-23) * paragraphs [0107], [0166], [0167]; figures 5,9,10 * | 1-15 | TECHNICAL FIELDS SEARCHED (IPC) H04W H04L |
| A | WO 2004/100403 A1 (SAMSUNG ELECTRONICS CO LTD [KR]; BEIJING SAMSUNG TELECOM R&D CT [CN];) 18 November 2004 (2004-11-18) * figures 7A,7B,8 * | 1-15 | |

The present search report has been drawn up for all claims

| Place of search | Date of completion of the search | Examiner |
|---|---|---|
| Munich | 16 March 2017 | Muntean, T |

EPO FORM 1503 03.82 (P04C01)

## ANNEX TO THE EUROPEAN SEARCH REPORT
## ON EUROPEAN PATENT APPLICATION NO.

EP 16 20 3767

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2017

| Patent document cited in search report | | Publication date | Patent family member(s) | | Publication date |
|---|---|---|---|---|---|
| US 2005058058 | A1 | 17-03-2005 | KR | 20050014319 A | 07-02-2005 |
| | | | US | 2005058058 A1 | 17-03-2005 |
| US 2005135403 | A1 | 23-06-2005 | AT | 460796 T | 15-03-2010 |
| | | | CA | 2542382 A1 | 28-04-2005 |
| | | | CN | 1894909 A | 10-01-2007 |
| | | | EP | 1680897 A1 | 19-07-2006 |
| | | | ES | 2342888 T3 | 16-07-2010 |
| | | | HK | 1096224 A1 | 08-03-2013 |
| | | | JP | 5043437 B2 | 10-10-2012 |
| | | | JP | 5054151 B2 | 24-10-2012 |
| | | | JP | 2007509531 A | 12-04-2007 |
| | | | JP | 2010200363 A | 09-09-2010 |
| | | | KR | 20060086427 A | 31-07-2006 |
| | | | US | 2005135403 A1 | 23-06-2005 |
| | | | WO | 2005039128 A1 | 28-04-2005 |
| WO 2004100403 | A1 | 18-11-2004 | CN | 1549610 A | 24-11-2004 |
| | | | EP | 1623518 A1 | 08-02-2006 |
| | | | JP | 4319677 B2 | 26-08-2009 |
| | | | JP | 2006526308 A | 16-11-2006 |
| | | | KR | 20060009289 A | 31-01-2006 |
| | | | US | 2007032255 A1 | 08-02-2007 |
| | | | WO | 2004100403 A1 | 18-11-2004 |

EPO FORM P0459

For more details about this annex : see Official Journal of the European Patent Office, No. 12/82